# EUROPÄISCHE PATENTSCHRIFT

(11) **EP 3 605 317 B1**
(45) Veröffentlichungstag und Bekanntmachung des Hinweises auf die Patenterteilung: **01.05.2024**
(21) Anmeldenummer: 19188781.9
(22) Anmeldetag: 29.07.2019
(51) Int. Cl.: G06F 3/16, A47J 31/52, G10L 15/22

(54) **VERFAHREN ZUR SPRACHBEDIENUNG ZUMINDEST EINES ELEKTRONISCHEN GERÄTES, INSBESONDERE EINES HAUSGERÄTES EINES HAUSHALTS, SOWIE SYSTEM**
METHOD AND SYSTEM FOR VOICE OPERATING AT LEAST ONE ELECTRONIC DEVICE, ESPECIALLY A HOUSEHOLD DOMESTIC APPLIANCE
PROCÉDÉ DE COMMANDE VOCALE D'AU MOINS UN APPAREIL ÉLECTRONIQUE, EN PARTICULIER D'UN APPAREIL ÉLECTROMÉNAGER AINSI QUE SYSTÈME

(30) Priorität: 03.08.2018 DE 102018213024
(43) Veröffentlichungstag der Anmeldung: 05.02.2020
(73) Patentinhaber: Robert Bosch GmbH, 70442 Stuttgart (DE)
(72) Erfinder: Zibuschka, Jan, 71106 Magstadt (DE)

(56) Entgegenhaltungen:
- US-A1- 2015 120 294
- US-B1- 7 006 881
- Et Bureau: "smarter coffee: This coffee maker can brew a cuppa using your voice, an app, or fitness tracker - The Economic Times", , 1. Januar 2018 (2018-01-01), Seiten 1-2, XP055653339, Gefunden im Internet: URL:https://economictimes.indiatimes.com/m agazines/panache/this-coffee-maker-can-bre w-a-cuppa-using-your-voice-an-app-or-fitne ss-tracker/articleshow/62308100.cms [gefunden am 2019-12-16]

## Beschreibung

Die Erfindung betrifft ein Verfahren zur Sprachbedienung zumindest eines Hausgeräts eines Haushalts.

Außerdem betrifft die Erfindung ein System zur Sprachbedienung eines Hausgerätes eines Haushalts.

### Stand der Technik

Verfahren zur Sprachbedienung sind aus dem Stand der Technik bekannt. Beispielsweise offenbart die Offenlegungsschrift US 2015/0120294 A1 ein Verfahren zur Sprachbedienung zumindest eines Hausgeräts, wobei ein Sprachbefehl eines Benutzers erfasst wird, der erfasste Sprachbefehl auf einen Standard-Steuerbefehl überwacht wird, und das Hausgerät in Abhängigkeit von dem Standard-Steuerbefehl angesteuert wird. Weiterhin ist gemäß dem bekannten Verfahren vorgesehen, dass mittels einer Stimmerkennungssoftware die Identität des Benutzers anhand der Biometrie der Stimme des Benutzers ermittelt wird, und dass das Hausgerät auch in Abhängigkeit von Informationen, die in einem mit dem ermittelten Benutzer assoziierten Nutzerprofil gespeichert sind, angesteuert wird. Somit kann der Standard-Steuerbefehl durch die in dem Nutzerprofil des Benutzers enthaltenen Informationen ergänzt werden. Beispielsweise wird der Standard-Steuerbefehl an individuelle Präferenzen des Benutzers angepasst.

Die US 7,006,881 B1 offenbart ein Media Recording Device, erwähnt aber auch eine Kaffeemaschine. Ferner wird eine Spracherkennung zur Steuerung des Media Recording Device erwähnt.

Der Artikel "This coffee maker can brew a cuppa using your voice, an app, or fitness tracker" (XP055653339, https://economictimes.indiatimes.com/ magazines/panache/this-coffee-maker-can-brew-a-cuppa-using-your-voice-an-app-or-fitness-tracker/articleshow/62308100.cms) offenbart eine Kaffeemaschine, welche mittels Sprache gesteuert werden kann.

### Offenbarung der Erfindung

Das erfindungsgemäße Verfahren mit den Merkmalen des Anspruchs 1 hat den Vorteil, dass ein Hausgerät, auch in Abhängigkeit von Informationen angesteuert werden kann, die in Nutzerprofilen enthalten sind, die nicht dem Benutzer zugeordnet sind, der den Sprachbefehl spricht. Somit kann der Standard-Steuerbefehl auch an Präferenzen anderer Personen angepasst werden. Erfindungsgemäß ist hierzu vorgesehen, dass der erfasste Sprachbefehl auf Signalwörter überwacht wird, dass bei Erfassen eines Signalwortes ein gespeichertes Nutzerprofil in Abhängigkeit von dem erfassten Signalwort ausgewählt wird, und dass das Hausgerät in Abhängigkeit von dem Standard-Steuerbefehl einerseits und von in dem ausgewählten Nutzerprofil enthaltenen Information andererseits angesteuert wird. Insbesondere wird der Standard-Steuerbefehl durch die in dem Nutzerprofil enthaltenen Informationen individualisiert, sodass in Abhängigkeit von dem Standardsteuerbefehl einerseits und von den in dem ausgewählten Nutzerprofil enthaltenen Informationen andererseits ein Individual-Steuerbefehl ermittelt wird, und das Hausgerät in Abhängigkeit von dem Individual-Steuerbefehl angesteuert wird.

Gemäß einer vorteilhaften Weiterbildung der Erfindung ist vorgesehen, dass ein Standard-Steuerbefehl bei Erfassen eines gespeicherten Steuerwortes oder einer Kombination von gespeicherten Steuerworten erfasst wird. Daraus ergibt sich der Vorteil, dass das Verfahren intuitiv durchführbar ist. Beispielsweise handelt es sich bei dem Hausgerät um eine Kaffeemaschine. Gemäß diesem Beispiel könnte der Sprachbefehl "Mach einen Kaffee mit Milch" lauten. Der beispielhafte Sprachbefehl enthält zwei Steuerwörter, nämlich "Kaffee" und "Milch". Anhand der Kombination der beiden Steuerwörter wird der Standard-Steuerbefehl ermittelt, "Kaffee mit Milch". Insbesondere wird zum Erfassen der Steuerwörter eine Spracherkennungssoftware verwendet, durch die der gesprochene Sprachbefehl in eine Abfolge von Buchstaben beziehungsweise Worten umgewandelt wird. Das Verfahren ist auch zur Sprachbedienung anderer beziehungsweise mehrerer elektronischer Geräte, insbesondere Hausgeräte des Haushalts anwendbar, beispielsweise einer Heizung, einer Eismaschine, eines Kühlschranks, eines Herds, eines Ofens, eines Dampfgarers und/oder einer Multifunktionsküchenmaschine. Insbesondere sind in Abhängigkeit von dem zu bedienenden elektronischen Gerät unterschiedliche Steuerwörter, anhand derer Standard-Steuerbefehle für das jeweilige elektronische Gerät ermittelt werden, gespeichert. Alternativ dazu ist jedem elektronischen Gerät unabhängig von der Ausbildung des elektronischen Geräts die gleiche Liste mit Steuerwörtern zugeordnet.

Gemäß einer vorteilhaften Weiterbildung der Erfindung werden als Signalwörter gespeicherte Wörter verwendet, denen jeweils zumindest ein Nutzerprofil zugeordnet ist. Dadurch ist eine eindeutige Zuordnung der Signalwörter zu den Nutzerprofilen gewährleistet. Beispielsweise werden bei Erfassen des Sprachbefehls "Mach einen Kaffee mit Milch gemäß Nutzerprofil 1" die Steuerwörter "Kaffee" und "Milch" einerseits und das Signalwort "Nutzerprofil 1" andererseits erfasst. Demnach wird das Hausgerät in Abhängigkeit von dem Standard-Steuerbefehl "Kaffee mit Milch" und in Abhängigkeit von in dem Nutzerprofil 1 enthaltenen Informationen andererseits ergänzt. Vorliegend handelt es sich beispielsweise um Informationen bezüglich zu verwendender Volumina an Wasser beziehungsweise Milch, eine zu verwendende Menge an Kaffeepulver und/oder einen Mahlgrad des Kaffeepulvers.

Gemäß einer vorteilhaften Weiterbildung der Erfindung ist vorgesehen, dass als Signalwörter Namen von Personen verwendet werden. Daraus ergibt sich der Vorteil, dass die Auswahl von Nutzerprofilen besonders intuitiv erfolgt. Beispielsweise wird in dem Sprachbefehl "Mach einen Kaffee mit Milch für Robert" der Name "Robert" als Signalwort erfasst. In dem Fall, dass dem Namen "Robert" ein Nutzerprofil zugeordnet ist, wird das Hausgerät in Abhängigkeit von dem Standard-Steuerbefehl einerseits und von in dem dem Signalwort "Robert" zugeordneten Nutzerprofil enthaltenen Information andererseits angesteuert.

Somit wird gemäß dem vorliegenden Beispiel die Kaffeemaschine angesteuert, einen Kaffee mit Milch in Abhängigkeit von Informationen, die in Roberts Nutzerprofil enthalten sind, also gemäß den Präferenzen von Robert, zuzubereiten.

Gemäß einer vorteilhaften Weiterbildung der Erfindung ist vorgesehen, dass der Standard-Steuerbefehl durchgeführt wird, wenn das ausgewählte Nutzerprofil keine Informationen zur Anpassung des Standard-Steuerbefehls enthält. Somit wird zumindest der erfasste Standard-Steuerbefehl auch dann durchgeführt, wenn das Nutzerprofil keine Informationen zur Anpassung des Standard-Steuerbefehls enthält, beispielsweise wenn der ermittelte Standard-Steuerbefehl noch nie für das ausgewählte Nutzerprofil durchgeführt wurde. Insbesondere ist vorgesehen, dass der Benutzer aufgefordert wird, weitere Informationen bereitzustellen, wenn erkannt wird, dass das Nutzerprofil keine Informationen zur Anpassung des Standard-Steuerbefehls enthält.

Gemäß einer vorteilhaften Weiterbildung der Erfindung wird der Standard-Steuerbefehl durchgeführt, wenn kein Signalwort erkannt wird. Somit wird zumindest der erfasste Standard-Steuerbefehl auch dann durchgeführt, wenn kein Signalwort erkannt wird, beispielsweise wenn der Standard-Steuerbefehl für eine Person durchgeführt werden soll, der kein Nutzerprofil zugeordnet ist.

Gemäß einer vorteilhaften Weiterbildung der Erfindung einer bevorzugten Ausführungsform ist vorgesehen, dass der Benutzer durch eine optische und/oder akustische Ausgabeeinrichtung aufgefordert wird, ein neues Nutzerprofil anzulegen, wenn kein Signalwort erkannt wird. Daraus ergibt sich eine besonders komfortable Durchführbarkeit des Verfahrens. Beispielsweise wird in dem Sprachbefehl "Mach einen Kaffee mit Milch für Anna" kein Signalwort erkannt, wenn dem Namen "Anna" kein gespeichertes Nutzerprofil zugeordnet ist. Jedoch erkennt die Spracherkennungssoftware, dass es sich bei dem Wort "Anna" um einen Namen handelt, der ein Signalwort sein könnte. Um in Zukunft den erfassten Standard-Steuerbefehl gemäß den Präferenzen von Anna durchzuführen, wird der Benutzer demnach aufgefordert, ein neues Nutzerprofil, also ein Nutzerprofil für Anna, anzulegen, oder es wird automatisch ein neues Nutzerprofil angelegt, ohne dass der Benutzer eingebunden wird.

Erfindungsgemäß wird zumindest ein Schritt des Verfahrens auf einem Server außerhalb des Haushalts durchgeführt. Daraus ergibt sich der Vorteil, dass der Haushalt mit dem zumindest einen Hausgerät nicht sämtliche für die Durchführung des Verfahrens benötigten Vorrichtungen aufweisen muss. Beispielsweise wird die Spracherkennung auf einem Server außerhalb des Haushalts durchgeführt. Dadurch, dass die Spracherkennung auf dem Server durchgeführt wird, sind die Hausgeräte, die gemäß dem Verfahren bedient werden sollen, kostengünstig herstellbar.

Die Erfindung betrifft auch ein System zur Sprachbedienung zumindest eines Hausgeräts eines Haushalts, mit den Merkmalen des Anspruchs 9. Das System umfasst Vorrichtungen, insbesondere weist das System eine Spracheingabevorrichtung zum Erfassen eines Sprachbefehls, einen Datenspeicher zum Speichern von Nutzerprofilen und Bereitstellen von Informationen aus den Nutzerprofilen, und ein speziell hergerichtetes Steuergerät auf, das dazu ausgebildet ist, bei bestimmungsgemäßem Gebrauch das erfindungsgemäße Verfahren durchzuführen. Es ergeben sich daraus die bereits genannten Vorteile. Weitere bevorzugte Merkmale und Merkmalskombinationen ergeben sich aus dem oben beschriebenen sowie aus den Ansprüchen.

Gemäß einer vorteilhaften Weiterbildung der Erfindung des Systems ist vorgesehen, dass das Hausgerät die Spracheingabevorrichtung aufweist.

Vorzugsweise weist das System eine mobile Eingabeeinrichtung, beispielsweise ein Smartphone oder einen Smart Speaker, auf, die die Spracheingabevorrichtung, den Datenspeicher und/oder das Steuergerät aufweist. Insbesondere weist die Eingabeeinrichtung zumindest die Spracheingabevorrichtung auf, sodass sich der Vorteil ergibt, dass das Verfahren auch dann durchgeführt werden kann, wenn sich der Benutzer nicht in unmittelbarer Nähe zu dem zu bedienenden Hausgerät befindet. Außerdem ist es nicht notwendig, dass das Hausgerät beziehungsweise jedes Hausgerät des Haushalts alle oben genannten Vorrichtungen aufweist, wenn die mobile Eingabeeinrichtung zumindest eine der Vorrichtungen aufweist. Es sind die Hausgeräte vorzugsweise spracheingabevorrichtungsfrei, datenspeicherfrei und/oder steuergerätfrei, zumindest soweit wie möglich, ausgebildet.

Gemäß einer vorteilhaften Weiterbildung der Erfindung weist das System einen Server auf, der außerhalb des Haushalts angeordnet ist, wobei der Server den Datenspeicher und/oder das Steuergerät aufweist. Daraus ergibt sich der Vorteil, dass Kosten für das System reduziert werden können, weil nicht jeder Haushalt, in dem ein Hausgerät gemäß dem Verfahren bedient werden soll, den Datenspeicher und/oder das Steuergerät zur Durchführung des Verfahrens aufweisen muss. Vorzugsweise ist ein Datenspeicher beziehungsweise ein Steuergerät vorgesehen, das mehreren Haushalten zugeordnet ist, sodass der Datenspeicher beziehungsweise das Steuergerät Bestandteil mehrerer Systeme ist.

Im Folgenden soll die Erfindung anhand der Zeichnungen näher erläutert werden, wobei gleiche beziehungsweise entsprechende Elemente mit den gleichen Bezugszeichen versehen sind. Dazu zeigen
- Figuren 1A bis 1D: verschiedene Ausführungsbeispiele eines Systems zur Sprachbedienung zumindest eines Hausgerätes eines Haushalts, und
- Figur 2: ein vorteilhaftes Verfahren zur Sprachbedienung des Hausgerätes.

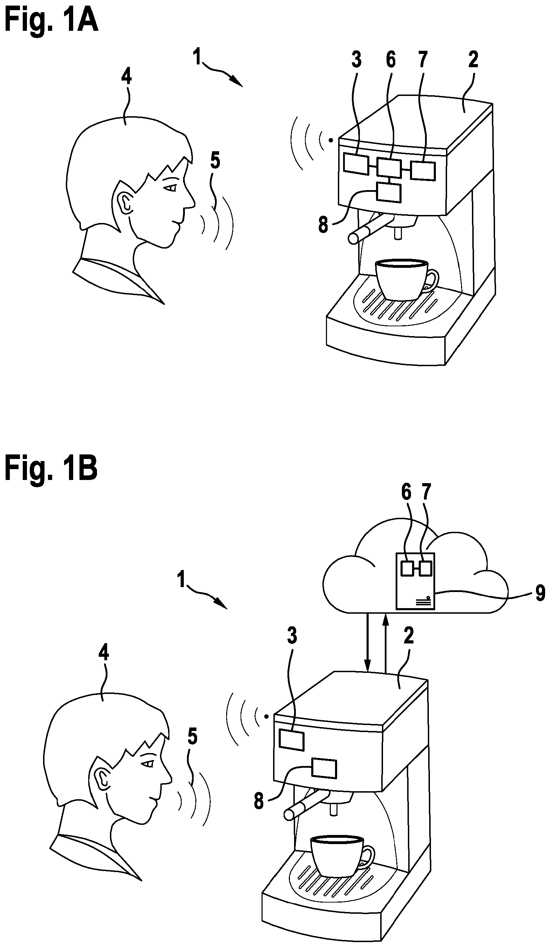

Figur 1A zeigt ein nicht von den Ansprüchen umfasstes Ausführungsbeispiel eines Systems 1 zur Sprachbedienung zumindest eines elektronischen Gerätes 2. Das elektronische Gerät 2 ist hierbei beispielhaft als ein Hausgerät 2, vorliegend einer Kaffeemaschine 2 ausgeführt. Das System 1 weist eine Spracheingabevorrichtung 3 auf, die dazu ausgebildet ist, einen durch einen Benutzer 4 gesprochenen Sprachbefehl 5 zu erfassen. Außerdem weist das System 1 ein Steuergerät 6 auf, das mit der Spracheingabevorrichtung 3 verbunden und dazu ausgebildet ist, den erfassten Sprachbefehl 5 auf einen Standard-Steuerbefehl und auf Signalwörter zu überwachen.

Außerdem weist das System 1 einen Datenspeicher 7 zum Speichern von Nutzerprofilen und zum Bereitstellen von Informationen aus den Nutzerprofilen auf. Das Steuergerät 6 ist dazu ausgebildet, bei Erfassen eines Signalwortes, dem ein gespeichertes Nutzerprofil zugeordnet ist, das dem Signalwort zugeordnete Nutzerprofil auszuwählen und einen Aktuator 8 der Kaffeemaschine 2 in Abhängigkeit von dem Standard-Steuerbefehl einerseits und von in dem ausgewählten Nutzerprofil enthaltenen Informationen andererseits anzusteuern. Hierzu ermittelt das Steuergerät 6 in Abhängigkeit von dem Standard-Steuerbefehl und in Abhängigkeit von den Informationen einen Individual-Steuerbefehl, der zur Ansteuerung des Aktuators 8 verwendet wird.

Gemäß dem in Figur 1A dargestellten Ausführungsbeispiel des Systems 1 weist die Kaffeemaschine 2 die Spracheingabevorrichtung 3, das Steuergerät 6 und den Datenspeicher 7 auf. Somit weist die Kaffeemaschine 2 sämtliche Elemente auf, die für die Sprachbedienung der Kaffeemaschine 2 notwendig sind, sodass keine zusätzlichen Vorrichtungen zur Sprachbedienung der Kaffeemaschine 2 notwendig sind.

Figur 1B zeigt ein erfindungsgemäßes Ausführungsbeispiel des Systems 1.

Gemäß dem in Figur 1B dargestellten Ausführungsbeispiel weist das System 1 einen Server 9 auf, der außerhalb des Haushalts mit der Kaffeemaschine 2 angeordnet ist. Vorliegend weist der Server 9 sowohl das Steuergerät 6 als auch den Datenspeicher 7 auf. Gemäß dem in Figur 1B dargestellten Ausführungsbeispiel ist somit vorgesehen, dass der Sprachbefehl 5 durch die an der Kaffeemaschine 2 angeordnete Spracheingabevorrichtung 3 erfasst wird, und dass der Individual-Steuerbefehl auf dem Server 9 ermittelt wird. Der ermittelte Individual-Steuerbefehl wird der Kaffeemaschine 2 durch den Server 9 zur Verfügung gestellt. Hierzu sind nicht dargestellte Kommunikationsmittel vorgesehen, sodass ein Austausch von Daten zwischen der Kaffeemaschine 2 und dem Server 9 gewährleistet ist.

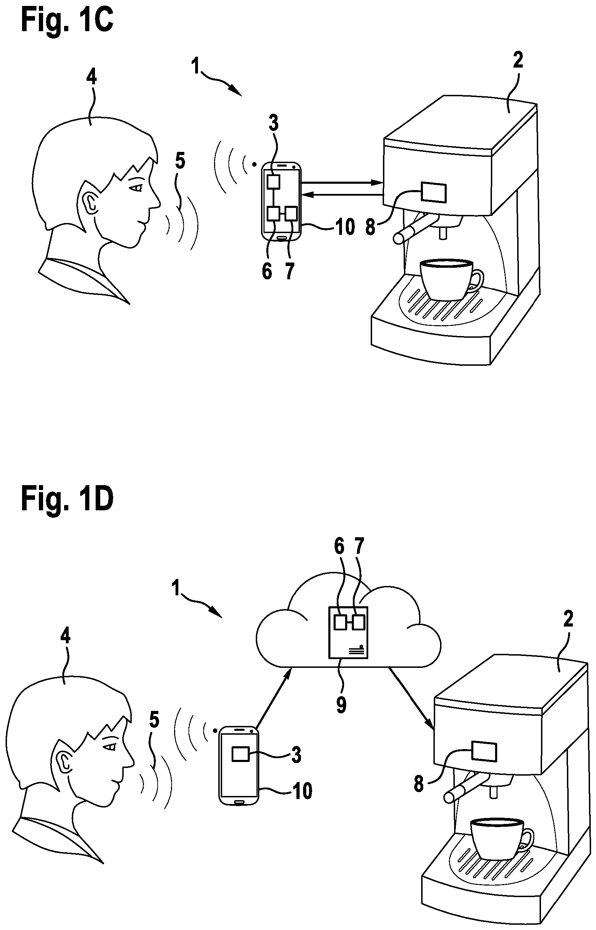

Figur 1C zeigt ein weiteres nicht von den Ansprüchen umfasstes Ausführungsbeispiel des Systems 1. Gemäß dem in Figur 1C dargestellten Ausführungsbeispiel ist eine mobile Eingabeeinrichtung 10, vorliegend ein Smartphone 10, vorgesehen, das die Spracheingabevorrichtung 3, das Steuergerät 6 und den Datenspeicher 7 aufweist. Somit wird gemäß dem in Figur 1C dargestellten Ausführungsbeispiel der Sprachbefehl 5 durch die mobile Eingabeeinrichtung 10 erfasst und auch der Individual-Steuerbefehl durch die mobile Eingabeeinrichtung 10 ermittelt. Auch gemäß diesem Ausführungsbeispiel sind geeignete Kommunikationsmittel vorgesehen, sodass ein Datenaustausch zwischen der mobilen Eingabeeinrichtung 10 und der Kaffeemaschine 2 gewährleistet ist. Alternativ zu dem in Figur 1C dargestellten Ausführungsbeispiel ist eine mobile Eingabeeinrichtung 10 vorgesehen, die nur die Spracheingabevorrichtung 3 aufweist, wobei das Steuergerät 6 und der Datenspeicher 7 an der Kaffeemaschine 2 angeordnet sind. Somit ermittelt gemäß diesem Ausführungsbeispiel die Kaffeemaschine 2 den Individual-Steuerbefehl.

Figur 1D zeigt ein weiteres nicht von den Ansprüchen umfasstes Ausführungsbeispiel des Systems 1. Gemäß dem Ausführungsbeispiel weist die mobile Eingabeeinrichtung 10 die Spracheingabevorrichtung 3 auf, sodass der Sprachbefehl mittels der mobilen Eingabeeinrichtung 10 erfasst wird. Außerdem weist der Server 9 das Steuergerät 6 und den Datenspeicher 7 auf, sodass der Individual-Steuerbefehl durch den Server 9 ermittelt wird. Auch gemäß dem vierten Ausführungsbeispiel sind geeignete Kommunikationsmittel vorhanden, sodass die mobile Eingabeeinrichtung 10 den erfassten Sprachbefehl an den Server 9 senden kann und der Server 9 den ermittelten Individual-Steuerbefehl an die Kaffeemaschine 2 senden kann.

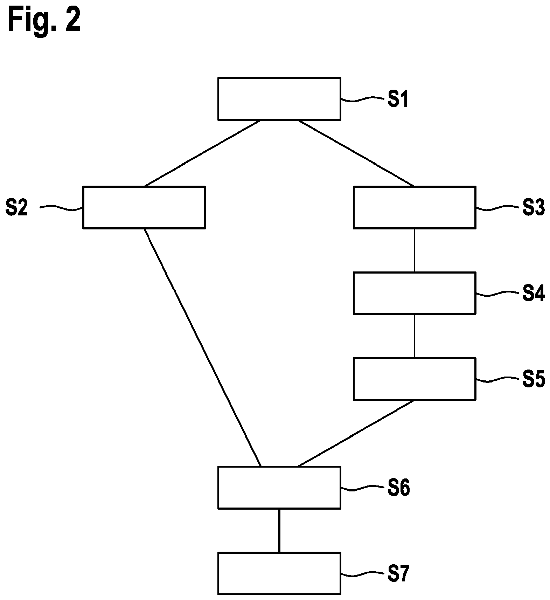

Figur 2 zeigt anhand eines Flussdiagramms ein vorteilhaftes Verfahren zum Betreiben des Systems 1. In einem ersten Schritt S1 wird der durch den Nutzer 4 gesprochene Sprachbefehl 5 mittels der Spracheingabevorrichtung 3 erfasst. Beispielsweise wird der Sprachbefehl 5 "Mach einen Kaffee mit Milch für Robert" erfasst.

In einem zweiten Schritt S2 wird der erfasste Sprachbefehl 5 auf einen Standard-Steuerbefehl überwacht. Hierzu wird eine Spracherkennungssoftware verwendet, durch die der gesprochene Sprachbefehl in eine Abfolge von Buchstaben beziehungsweise Worten umgewandelt wird. Vorliegend werden die Steuerworte "Kaffee" und "Milch" erfasst. In Abhängigkeit von den erfassten Steuerworten wird dann der Standard-Steuerbefehl ermittelt. Dieser umfasst Informationen zur Ansteuerung eines Hausgerätes, das durch den Sprachbefehl 5 angesteuert werden soll. Vorliegend soll durch den Sprachbefehl 5 die Kaffeemaschine 2 angesteuert werden, einen Kaffee mit Milch zuzubereiten.

In einem dritten Schritt S3 wird der Sprachbefehl auf Signalwörter überwacht. Als Signalwörter sind dabei vorliegend Namen zu verstehen, denen jeweils ein gespeichertes Nutzerprofil zugeordnet ist. Wenn ein Signalwort erfasst wird, wird in dem Schritt S3 das Nutzerprofil ausgewählt, das dem erfassten Signalwort zugeordnet ist. Vorliegend wird als Signalwort "Robert" erfasst. Demnach wird das Nutzerprofil ausgewählt, das dem Signalwort "Robert" zugeordnet ist.

In einem vierten Schritt S4 werden in dem ausgewählten Nutzerprofil enthaltene Informationen erfasst, durch die der Standard-Steuerbefehl ergänzt beziehungsweise angepasst werden kann. Vorliegend umfassen diese Informationen beispielsweise eine Menge an zu verwendendem Kaffeepulver, einen Mahlgrad des Kaffeepulvers und zu verwendende Volumina an Wasser beziehungsweise Milch.

In einem optionalen Schritt S5 wird der Benutzer 4 durch eine optische und/oder akustische Ausgabeeinrichtung aufgefordert, ein neues Nutzerprofil anzulegen, wenn kein Signalwort erkannt wird. Außerdem kann der Nutzer 4 in dem optionalen Schritt S5 aufgefordert werden, zusätzliche Informationen bereitzustellen, wenn das in dem Schritt S3 ausgewählte Nutzerprofil keine Informationen zur Anpassung beziehungsweise zur Ergänzung des Standard-Steuerbefehls aufweist. Alternativ wird in Schritt S5 ein neues Benutzerprofil automatisch angelegt, also ohne Rücksprache mit dem Benutzer.

In einem sechsten Schritt S6 wird in Abhängigkeit von dem erfassten Standard-Steuerbefehl einerseits und den in dem ausgewählten Nutzerprofil enthaltenen Informationen andererseits ein Individual-Steuerbefehl ermittelt. Insbesondere wird der Standard-Steuerbefehl zur Erzeugung des Individual-Steuerbefehls durch die enthaltenen Informationen ergänzt. Alternativ werden in dem Standard-Steuerbefehl enthaltene Informationen durch in dem Nutzerprofil enthaltene Informationen ersetzt.

In einem siebten Schritt S7 wird ein Aktuator 8 der Kaffeemaschine 2 in Abhängigkeit von dem Individual-Steuerbefehl angesteuert, sodass die Kaffeemaschine 2 den Individual-Steuerbefehl durchführt. Optional wird der Benutzer 4 in dem Schritt S7 durch eine optische und/oder akustische Ausgabevorrichtung des Systems 1 davon in Kenntnis gesetzt, dass der Individual-Steuerbefehl durchgeführt wird.

Alternativ zu dem oben beschriebenen Ausführungsbeispiel des Verfahrens wird das Verfahren zur Sprachbedienung anderer elektronischer Geräte, wie Hausgeräte beziehungsweise mehrerer Hausgeräte, beispielsweise einer Heizung, einer Eismaschine, eines Kühlschranks, eines Herds, eines Ofens, eines Dampfgarers und/oder einer Multifunktionsküchenmaschine verwendet. Wenn das System mehrere Hausgeräte aufweist, die mittels des Verfahrens angesteuert werden können, ist die Recheneinheit 6 optional dazu ausgebildet, in Abhängigkeit der erfassten Steuerworte zu ermitteln, welches der Hausgeräte bedient werden soll, und dann nur das zu bedienende Hausgerät anzusteuern.

## Patentansprüche

1. Verfahren zur Sprachbedienung zumindest eines Hausgerätes (2) eines Haushalts, mit folgenden Schritten:
a. Erfassen eines Sprachbefehls (5) mittels einer Spracheingabevorrichtung (3) des Hausgerätes (2) oder einer mobilen Eingabeeinrichtung (10),
b. Überwachen des Sprachbefehls (5) auf einen Standard-Steuerbefehl und auf Signalwörter
- durch einen außerhalb des Haushalts angeordneten Server (9), wenn das Erfassen des Sprachbefehls (5) mittels der Spracheingabevorrichtung (3) des Hausgeräts (2) erfolgt, oder
- durch das Hausgerät (2), wenn das Erfassen des Sprachbefehls (5) mittels der Spracheingabevorrichtung (3) der mobilen Eingabeeinrichtung (10) erfolgt,
c. bei Erkennung eines Standard-Steuerbefehls und eines Signalwortes durch den Server (9) respektive das Hausgerät (2), Auswählen eines gespeicherten Nutzerprofils in Abhängigkeit von dem erkannten Signalwort, und Ansteuern des Hausgerätes (2) in Abhängigkeit von dem erkannten Standard-Steuerbefehl und von in dem ausgewählten Nutzerprofil enthaltenen Informationen,
wobei das Signalwort nicht am Beginn des Sprachbefehls (5) steht.

2. Verfahren nach Anspruch 1, wobei ein Standard-Steuerbefehl basierend auf einem gespeicherten Steuerwort oder einer Kombination von gespeicherten Steuerworten erkannt wird.

3. Verfahren nach einem der vorhergehenden Ansprüche, wobei als Signalwörter gespeicherte Wörter verwendet werden, denen jeweils zumindest ein Nutzerprofil zugeordnet ist.

4. Verfahren nach Anspruch 3, wobei als Signalwörter Namen von Personen verwendet werden.

5. Verfahren nach einem der vorhergehenden Ansprüche, wobei der Standard-Steuerbefehl durchgeführt wird, wenn das ausgewählte Nutzerprofil keine Informationen zur Anpassung des Standard-Steuerbefehls enthält.

6. Verfahren nach einem der vorhergehenden Ansprüche, wobei der Standard-Steuerbefehl durchgeführt wird, wenn kein Signalwort erkannt wird.

7. Verfahren nach einem der Ansprüche 4 bis 6, wobei bei Erkennen eines Namens, dem kein Nutzerprofil zugeordnet ist, ein Benutzer durch eine optische und/oder akustische Ausgabeeinrichtung aufgefordert wird, ein neues Nutzerprofil anzulegen.

8. Verfahren nach einem der Ansprüche 4 bis 6, wobei bei Erkennen eines Namens, dem kein Nutzerprofil zugeordnet ist, ein neues Nutzerprofil automatisch angelegt wird.

9. System (1) zur Sprachbedienung zumindest eines Hausgerätes (2) eines Haushalts, wobei das System (1) Vorrichtungen umfasst, die dazu ausgebildet sind, bei bestimmungsgemäßem Gebrauch das Verfahren nach einem der Ansprüche 1 bis 8 durchzuführen.

10. System (1) nach Anspruch 9, wobei das Hausgerät (2) die Spracheingabevorrichtung (3) aufweist.

11. System (1) nach einem der Ansprüche 9 und 10, wobei eine mobile Eingabeeinrichtung (10) ausgebildet ist, die die Spracheingabevorrichtung (3) und ein Kommunikationsmittel aufweist, und dass das Kommunikationsmittel vorgesehen ist, einen Datenaustausch zwischen der mobilen Eingabeeinrichtung (10) und dem Hausgerät (2) zu gewährleisten.

12. System (1) nach einem der Ansprüche 9 bis 11, wobei der außerhalb des Haushalts angeordnete Server (9) den Datenspeicher (7) und/oder das Steuergerät (6) aufweist.

13. System (1) nach einem der Ansprüche 9 bis 12, wobei ein Kommunikationsmittel ausgebildet ist, welches einen Datenaustausch zwischen Hausgerät (2) und Server (9) gewährleistet.

## Claims

1. Method for the voice-controlled operation of at least one household appliance (2) of a household, having the following steps:
a. detecting a voice command (5) by means of a voice input apparatus (3) of the household appliance (2) or of a mobile input device (10),
b. monitoring the voice command (5) for a standard control command and for signal words
- by way of a server (9) arranged outside of the household if the voice command (5) is detected by means of the voice input apparatus (3) of the household appliance (2), or
- by way of the household appliance (2) if the voice command (5) is detected by means of the voice input apparatus (3) of the mobile input device (10),
c. in the event that a standard control command and a signal word are identified by the server (9) or the household appliance (2), respectively, selecting a stored user profile on the basis of the identified signal word, and controlling the household appliance (2) on the basis of the identified standard control command and of information contained in the selected user profile, wherein the signal word is not at the beginning of the voice command (5).

2. Method according to Claim 1, wherein a standard control command is identified based on a stored control word or on a combination of stored control words.

3. Method according to either of the preceding claims, wherein stored words, each of which is assigned at least one user profile, are used as signal words.

4. Method according to Claim 3, wherein names of people are used as signal words.

5. Method according to one of the preceding claims, wherein the standard control command is carried out if the selected user profile contains no information relating to the adjustment of the standard control command.

6. Method according to one of the preceding claims, wherein the standard control command is carried out if no signal word is identified.

7. Method according to one of Claims 4 to 6, wherein in the event that a name to which no user profile is assigned is identified, a visual and/or audible output device prompts a user to create a new user profile.

8. Method according to one of Claims 4 to 6, wherein in the event that a name to which no user profile is assigned is identified, a new user profile is created automatically.

9. System (1) for the voice-controlled operation of at least one household appliance (2) of a household, wherein the system (1) comprises apparatuses which are designed, under normal conditions of use, to carry out the method according to one of Claims 1 to 8.

10. System (1) according to Claim 9, wherein the household appliance (2) has the voice input apparatus (3) .

11. System (1) according to either of Claims 9 and 10, wherein a mobile input device (10) is designed which has the voice input apparatus (3) and a communication means, and wherein the communication means is provided to ensure data exchange between the mobile input device (10) and the household appliance (2).

12. System (1) according to one of Claims 9 to 11, wherein the server (9) arranged outside of the household has the data store (7) and/or the control unit (6).

13. System (1) according to one of Claims 9 to 12, wherein a communication means is designed which ensures data exchange between the household appliance (2) and the server (9).

## Revendications

1. Procédé de commande vocale d'au moins un appareil électroménager (2) d'un domicile, comprenant les étapes consistant à :
a. détecter une instruction vocale (5) au moyen d'un dispositif d'entrée vocale (3) de l'appareil électroménager (2) ou d'un équipement d'entrée mobile (10),
b. surveiller l'instruction vocale (5) pour détecter une instruction de commande standard et des mots de signalisation
- au moyen d'un serveur (9) situé à l'extérieur du domicile, lorsque la détection de l'instruction vocale (5) est effectuée au moyen du dispositif d'entrée vocale (3) de l'appareil électroménager (2), ou
- au moyen de l'appareil électroménager (2), lorsque la détection de l'instruction vocale (5) est effectuée au moyen du dispositif d'entrée vocale (3) de l'équipement d'entrée mobile (10),
c. lors de la reconnaissance d'une instruction de commande standard et d'un mot de signalisation par le serveur (9), respectivement par l'appareil électroménager (2), la sélection d'un profil d'utilisateur mémorisé en fonction du mot de signalisation reconnu, et le pilotage de l'appareil électroménager (2) en fonction de l'instruction de commande standard reconnue et d'informations contenues dans le profil d'utilisateur sélectionné,
dans lequel le mot de signalisation ne se trouve pas au début de l'instruction vocale (5).

2. Procédé selon la revendication 1, dans lequel une instruction de commande standard est reconnue sur la base d'un mot de commande mémorisé ou d'une combinaison de mots de commande mémorisés.

3. Procédé selon l'une des revendications précédentes, dans lequel des mots mémorisés auxquels est respectivement associé au moins un profil d'utilisateur sont utilisés en tant que mots de signalisation.

4. Procédé selon la revendication 3, dans lequel des noms de personnes sont utilisés en tant que mots de signalisation.

5. Procédé selon l'une des revendications précédentes, dans lequel l'instruction de commande standard est exécutée lorsque le profil d'utilisateur sélectionné ne contient aucune information destinée à adapter l'instruction de commande standard.

6. Procédé selon l'une des revendications précédentes, dans lequel l'instruction de commande standard est exécutée lorsqu'aucun mot de signalisation n'est reconnu.

7. Procédé selon l'une des revendications 4 à 6, dans lequel, lorsqu'un nom auquel aucun profil d'utilisateur n'est associé est reconnu, un utilisateur est invité par un équipement de sortie optique et/ou acoustique à appliquer un nouveau profil d'utilisateur.

8. Procédé selon l'une des revendications 4 à 6, dans lequel, lors de la reconnaissance d'un nom auquel aucun profil d'utilisateur n'est associé, un nouveau profil d'utilisateur est automatiquement appliqué.

9. Système (1) de commande vocale d'au moins un appareil électroménager (2) d'un domicile, dans lequel le système (1) comprend des dispositifs qui sont conçus pour mettre en œuvre, lors d'une utilisation normale, le procédé selon l'une des revendications 1 à 8.

10. Système (1) selon la revendication 9, dans lequel l'appareil électroménager (2) comporte le dispositif d'entrée vocale (3).

11. Système (1) selon l'une des revendications 9 et 10, dans lequel un équipement d'entrée mobile (10) est conçu de manière à ce qu'il comporte le dispositif d'entrée vocale (3) et un moyen de communication, et dans lequel le moyen de communication est prévu pour assurer un échange de données entre l'équipement d'entrée mobile (10) et l'appareil électroménager (2).

12. Système (1) selon l'une des revendications 9 à 11, dans lequel le serveur (9) situé à l'extérieur du domicile comporte la mémoire de données (7) et/ou l'appareil de commande (6).

13. Système (1) selon l'une des revendications 9 à 12, dans lequel un moyen de communication est conçu pour assurer un échange de données entre l'appareil électroménager (2) et le serveur (9).
